(19) Europäisches Patentamt

European Patent Office

Office européen des brevets

(11) **EP 2 000 380 A2**

(12) **EUROPEAN PATENT APPLICATION**
published in accordance with Art. 153(4) EPC

(43) Date of publication:
**10.12.2008 Bulletin 2008/50**

(51) Int Cl.:
*B60W 30/14* (2006.01)   *B60T 7/12* (2006.01)
*B60W 10/00* (2006.01)   *B60W 10/04* (2006.01)
*B60W 10/10* (2006.01)   *B60W 10/18* (2006.01)
*B60W 30/00* (2006.01)   *F02D 29/02* (2006.01)

(21) Application number: **07739516.8**

(22) Date of filing: **23.03.2007**

(86) International application number:
**PCT/JP2007/056075**

(87) International publication number:
**WO 2007/111267 (04.10.2007 Gazette 2007/40)**

(84) Designated Contracting States:
**DE FR GB**

(30) Priority: **24.03.2006   JP 2006083779**

(71) Applicant: **Toyota Jidosha Kabushiki Kaisha Toyota-shi, Aichi 471-8571 (JP)**

(72) Inventor: **ABE, Kyoichi Toyota-shi, Aichi 471-8571 (JP)**

(74) Representative: **Winter, Brandl, Fürniss, Hübner Röss, Kaiser, Polte Partnerschaft Patent- und Rechtsanwaltskanzlei Bavariaring 10 80336 München (DE)**

(54) **VEHICLE TRAVEL CONTROL DEVICE AND VEHICLE TRAVEL CONTROL METHOD**

(57)     Target acceleration of a subject vehicle is set (step ST1); a reference limit value A is obtained based on the set target acceleration TG (step ST2); actual acceleration of the subject vehicle is obtained (step ST3); a limit value magnification K is calculated so that a limit value S for limiting a change of the target acceleration becomes larger as a difference between the set target acceleration TG and the detected actual acceleration RG becomes larger (step ST4); the limit value S is calculated (step ST5); the set target acceleration TG is limited based on the set limit value S (step ST6); a braking driving force is calculated based on the limited target acceleration SG (step ST7); and the calculated braking driving force is generated by a selected braking driving force generating unit (step ST8). Smooth acceleration and deceleration of the vehicle can be performed according to a travel state of the vehicle, and followability to the set target deceleration can be improved.

FIG.3

**Description**

TECHNICAL FIELD

The present invention relates to a vehicle travel control device and a vehicle travel control method, and more particularly, to a vehicle travel control device and a vehicle travel control method that set a target acceleration and generate a braking driving force corresponding to the set target acceleration.

BACKGROUND ART

On a conventional vehicle, a vehicle travel control device is mounted as a unit for reducing driving operations by a driver on a subject vehicle. The vehicle travel control device performs vehicle travel control by, for example, making the subject vehicle running at a set speed, or running in pace with a vehicle ahead, in other words, the vehicle travel control device performs adaptive cruise control (ACC). In the ACC, target acceleration is set depending on a travel state of the subject vehicle.
For example, the acceleration is set corresponding to preset speed, or set to allow the subject vehicle keep pace with a vehicle ahead. An engine and a brake that generate a braking driving force are controlled so as to generate a braking driving force corresponding to the target acceleration. Techniques for controlling the generation of braking driving force based on the target acceleration are described in Patent Documents 1 to 3, for example.

When there is a large difference between the target acceleration and actual acceleration, that is, actual acceleration of the subject vehicle, the subject vehicle experiences a sudden acceleration or deceleration. When the subject vehicle cannot accelerate and decelerate smoothly, a passenger of the subject vehicle feels uncomfortable. Techniques for alleviating such problem are proposed, for example, in Patent Document 4. A conventional vehicle travel control device described in Patent Document 4 limits target deceleration by a limit value so that the target deceleration gradually approaches eventual target deceleration when the target deceleration can cause a sudden speed change, in other words, when the difference between the target deceleration and the actual acceleration is large. According to this technique, the change of the set target deceleration is limited based on a limit value which limits the change of the target deceleration, and an engine and a brake generates a braking driving force according to the limited target deceleration.

Patent Document 1: Japanese Patent Application Laid-Open No. 2003-339980
Patent Document 2: Japanese Patent Application Laid-Open No. H10-109627
Patent Document 3: Japanese Patent Application Laid-Open No. H5-286426
Patent Document 4: Japanese Patent Application Laid-Open No. H11-348746

DISCLOSURE OF INVENTION

PROBLEM TO BE SOLVED BY THE INVENTION

The vehicle travel control device of Patent Document 1 changes the limit value according to the target deceleration and does not maintain the limit value at a constant level. Specifically, the limit value increases as the target deceleration increases. In other words, since the limit value gradually increases as the target deceleration increases, the target deceleration limited by the limit value gradually approaches the set target deceleration. Therefore, when the target deceleration is large, the target deceleration limited by the limit value can reach the set target deceleration quickly within such a range that the comfort of the passenger of the subject vehicle is not compromised.

In the vehicle travel control device of Patent Document 1, however, when the subject vehicle turns from an accelerated state to a decelerated state, the limit value is not large. Therefore, it takes time until the target deceleration limited by the limit value reaches the set target deceleration. Further, in the vehicle travel control device, the limit value is set so as to make the target deceleration limited by the limit value reach the set target deceleration quickly within such a range that the comfort of the passenger of the subject vehicle is not compromised, in other words, the limit value is set to make two purposes achieved at the same time. Hence, the acceleration and deceleration sometimes cannot be made smooth depending on the travel state of the subject vehicle, and it takes time until the target deceleration limited by the limit value reaches the set target deceleration.

The present invention is made in view of the above, and an object of the present invention is to provide a vehicle travel control device and a vehicle travel control method that allow for smooth acceleration and deceleration corresponding to the travel state of the subject vehicle and improved followability to the set target deceleration.

MEANS FOR SOLVING PROBLEM

A vehicle travel control device according to the present invention includes a target acceleration setting unit that sets target acceleration of a subject vehicle, an actual acceleration obtaining unit that obtains actual acceleration of the subject vehicle, a limit value setting unit that sets a limit value for limiting a change of the target acceleration, and a braking driving force control unit that controls a braking driving force generating unit to limit the target acceleration based on the limit value set and to generate a braking driving force based on the target acceleration limited, and the limit value setting unit sets the limit value to a higher value as a difference between the target acceleration set and the actual acceleration detected is larger.

Further, a vehicle travel control method according to the present invention includes setting target acceleration of a subject vehicle, obtaining actual acceleration of the subject vehicle, setting a limit value for limiting a change of the target acceleration to a higher value as a difference between the target acceleration set and the actual acceleration detected is larger, limiting the target acceleration based on the limit value set, and making a braking driving force generating unit generate a braking driving force corresponding to a braking driving force based on the target acceleration limited.

When the difference between the set target acceleration and the actual acceleration is small, in other words, when sudden acceleration or deceleration is not performed, the limit value is not set to a large value so that the target acceleration limited by the limit value does not reach the set target acceleration quickly. Further, when the difference between the set target acceleration and the actual acceleration is large, in other words, when the sudden acceleration or deceleration is performed, the limit value is set to a large value so that the target acceleration limited by the limit value reach the set target acceleration quickly. Therefore, at the time of normal driving where the difference between the set target acceleration and the actual acceleration is small, the acceleration and deceleration are performed smoothly, whereby the vehicle travel control can be performed prioritizing the suppression of loss of comfort of the passenger of the subject vehicle over the followability to the set target acceleration. Further, at the time of emergent driving where the difference between the set target acceleration and the actual acceleration is large, sudden acceleration and deceleration are accepted, whereby the vehicle travel control can be performed prioritizing the improved followability to the set target acceleration over the suppression of loss of comfort of the passenger of the subject vehicle. Thus, the acceleration and deceleration can be performed smoothly depending on the travel state of the subject vehicle, and the followability to the set target acceleration can be improved.

Further, in the vehicle travel control device according to the present invention, the limit value setting unit preferably sets the limit value to a higher value when the set target acceleration is negative than when the set target acceleration is positive.

When the set target acceleration is negative, in other words, when the braking driving force generating unit generates braking force to decelerate the subject vehicle, the target acceleration limited by the limit value is made to reach the set target acceleration more quickly than when the subject vehicle is accelerated. In other words, the followability to the set target deceleration is further improved when the subject vehicle is decelerated than when the subject vehicle is accelerated. Hence, for example, when a vehicle ahead enters a lane on which the subject vehicle is running, or when a vehicle ahead on the same lane decelerates significantly, in other words, when the difference between the negative set target acceleration and the detected actual acceleration becomes large, the subject vehicle can be made to decelerate significantly right from an initial phase of braking thereof. Thus, the vehicle travel control can be performed prioritizing the safety of the subject vehicle.

EFFECT OF THE INVENTION

The vehicle travel control device and the vehicle travel control method according to the present invention do not increase the limit value when the difference between the set target acceleration and the actual acceleration is small, and increase the limit value when the difference between the set target acceleration and the actual acceleration is large, whereby the acceleration and deceleration can be achieved smoothly depending on the travel state of the subject vehicle and the followability to the set target acceleration can be improved.

BRIEF DESCRIPTION OF DRAWINGS

FIG. 1 is a block diagram of a configuration example of a vehicle travel control device according to the present invention;
FIG. 2 is a block diagram of a configuration example of the vehicle travel control device according to the present invention;

FIG. 3 is a flowchart of an operation of the vehicle travel control device according to the present invention;

FIG. 4 is a map of reference limit value; and

FIG. 5 is a graph of a relation between acceleration and magnification of a limit value.

EXPLANATIONS OF LETTERS OR NUMERALS

| 1 | Vehicle travel control device |
|---|---|
| 2 | Control device |
| 21 | Target acceleration setting unit (target acceleration setter) |
| 21a | Following target-acceleration calculating unit |
| 21b | Constant-speed target-acceleration calculating unit |
| 21c | Corner-acceleration-prohibiting target-acceleration calculating unit |
| 21d | Arbitrator |
| 22 | Actual acceleration obtaining unit |
| 23 | Limit value setting unit |
| 24 | Braking-driving-force control unit |
| 24a | Target acceleration limiting unit |
| 24b | Braking-driving-force generation selecting unit |
| 25 | Recognition unit |
| 3 | Object detecting sensor |
| 4 | Cruise control switch |
| 5 | Yaw rate sensor |
| 6 | G sensor |
| 7 | Vehicle speed sensor |
| 8 | Brake sensor |
| 9 | Braking device |
| 91 | Braking control device |
| 92 | Brake actuator |
| 93 | Brake |
| 10 | Throttle device |
| 101 | Throttle actuator |
| 102 | Throttle |
| 11 | Transmission device |
| 111 | Valve body |
| 112 | Transmission gear |
| $A$, $A_1$ to $A_4$ | Reference limit value |
| K | Limit value magnification |
| S | Limit value |
| RG | Actual acceleration |
| SG | Limited target acceleration |
| TG | Set target acceleration |

BEST MODE(S) FOR CARRYING OUT THE INVENTION

The present invention is described in detail below with reference to the accompanying drawings. Embodiments described below should not be taken as limiting the present invention. Further, elements of the embodiments below may include those which can be readily achieved by those skilled in the art or those substantially equivalent to those which can be readily achieved by those skilled in the art.

Embodiment

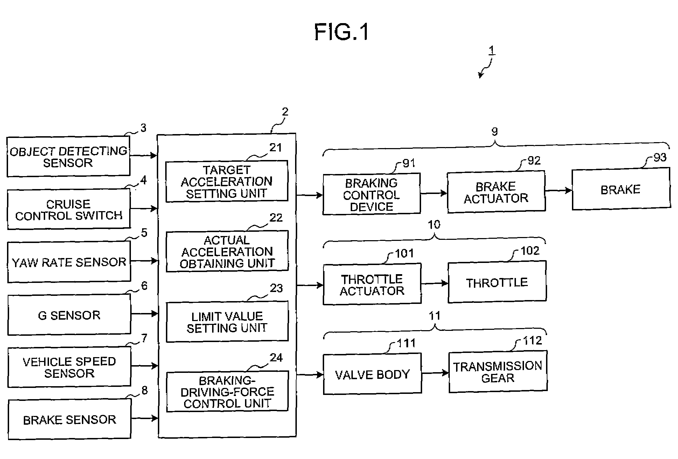

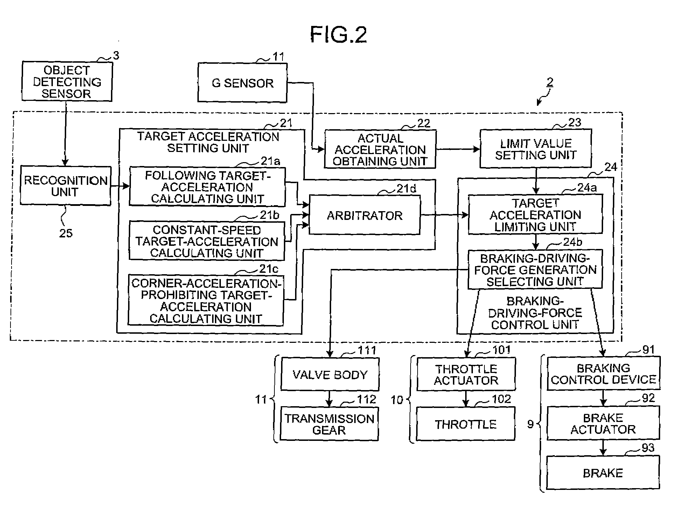

FIGS. 1 and 2 are block diagrams of a configuration example of a vehicle travel control device according to the present invention. As shown in FIGS. 1 and 2, a vehicle travel control device 1 according to the present invention is mounted on a subject vehicle not shown and performs vehicle travel control, in other words, ACC, to reduce driving operations of the subject vehicle by a driver. The vehicle travel control device 1 includes a control device 2, an object detecting sensor 3, a cruise control switch 4, a yaw rate sensor 5, a G sensor 6, a vehicle speed sensor 7, a brake sensor 8, a braking device 9, a throttle device 10, and a transmission device 11. The ACC includes a constant-speed travel control which makes the subject vehicle drive at a set speed, and a forward-vehicle following travel control which makes the subject vehicle drive in pace with a vehicle ahead.

The control device 2 controls the vehicle travel control device 1 as a whole. Further, the control device 2 controls an operation of an engine not shown. The control device 2 includes at least a target acceleration setting unit 21, an actual acceleration obtaining unit 22, a limit value setting unit 23, a braking-driving-force control unit 24, and a recognition unit 25.

The target acceleration setting unit 21 is a target acceleration setter. The target acceleration setting unit 21 sets target acceleration of a subject vehicle not shown. The target acceleration setting unit 21 sets target acceleration corresponding to a travel control condition of the subject vehicle controlled by the vehicle travel control device 1. For example, as shown in FIG. 2, the target acceleration setting unit 21 is configured with a following target-acceleration calculating unit 21a, a constant-speed target-acceleration calculating unit 21b, a corner-acceleration-prohibiting target-acceleration calculating unit 21c, and an arbitrator 21d, for example. The target acceleration includes both positive target acceleration and negative target acceleration, in other words, the target acceleration includes a target deceleration.

The following target-acceleration calculating unit 21a calculates and sets following target acceleration when the vehicle travel control device 1 determines that another vehicle is running in an advancing direction of the subject vehicle not shown on the same lane on which the subject vehicle is running and performs a forward-vehicle following travel control. The following target-acceleration calculating unit 21a is connected to the recognition unit 25 and the arbitrator 21d. Therefore, when the recognition unit 25 recognizes a vehicle ahead, the following target-acceleration calculating unit 21a receives an input of positional data of the recognized vehicle ahead, calculates the following target acceleration based on the positional data, and outputs the set following target acceleration to the arbitrator 21d.

The constant-speed target-acceleration calculating unit 21b calculates and sets constant-speed target acceleration based on speed set by the cruise control switch 4, for example. The constant-speed target-acceleration calculating unit 21b calculates and sets the constant-speed target acceleration when the vehicle travel control device 1 performs the forward-vehicle following travel control as well as when the vehicle travel control device 1 performs the constant-speed travel control of the subject vehicle based on the set constant-speed target acceleration. The constant-speed target-acceleration calculating unit 21b is connected to the arbitrator 21d. The constant-speed target-acceleration calculating unit 21b outputs the set constant-speed target acceleration to the arbitrator 21d.

The corner-acceleration-prohibiting target-acceleration calculating unit 21c calculates and sets corner-acceleration-prohibiting target acceleration for prohibiting acceleration at corners when the vehicle travel control device 1 determines that the subject vehicle is driving at a corner based on a road shape in an advancing direction of the subject vehicle not shown estimated by a road shape estimating device not shown for estimating a road shape and an estimated R of the road calculated based on a rotating speed of the subject vehicle detected by the yaw rate sensor 5. The corner-acceleration-prohibiting target-acceleration calculating unit 21c is connected to the arbitrator 21d. The corner-acceleration-prohibiting target-acceleration calculating unit 21c outputs the set corner-acceleration-prohibiting target acceleration to the arbitrator 21d.

The arbitrator 21d serves to set target acceleration to be employed when the vehicle travel control device 1 controls the driving of the subject vehicle not shown based on each of the target acceleration calculated by the calculating units described above. The arbitrator 21d sets smallest target acceleration among the calculated target accelerations as the target acceleration in the embodiment. Specifically, in this embodiment, the arbitrator 21d selects the smallest target acceleration among the following target acceleration calculated by the following target-acceleration calculating unit 21a, the constant-speed target-acceleration calculated by the constant-speed target-acceleration calculating unit 21b, and the corner-acceleration-prohibiting target acceleration calculated by the corner-acceleration-prohibiting target-acceleration calculating unit 21c, and sets the selected target acceleration as the target acceleration.

The actual acceleration obtaining unit 22 is a unit for obtaining actual acceleration. The actual acceleration obtaining unit 22 in the embodiment obtains the actual acceleration of the subject vehicle not shown detected by the G sensor 6.

The limit value setting unit 23 is a unit for setting a limit value. The limit value setting unit 23 sets a limit value for limiting a change of the target acceleration set by the target acceleration setting unit 21. The limit value setting unit 23 is connected to the actual acceleration obtaining unit 22 and the target acceleration limiting unit 24a of the braking-driving-force control unit 24. The limit value setting unit 23 receives an input of the actual acceleration of the subject vehicle not shown obtained by the actual acceleration obtaining unit 22 and outputs the set limit value to the target acceleration limiting unit 24a.

The braking-driving-force control unit 24 is a unit for controlling the braking driving force. The braking-driving-force control unit 24 controls a braking driving force generator, i.e., the braking device 9, the throttle device 10, and the transmission device 11 of the embodiment, so as to limit the target acceleration set by the target acceleration setting unit 21 based on the limit value set by the limit value setting unit 23 and to generate the braking driving force (braking force and driving force) based on the limited target acceleration. The braking-driving-force control unit 24 is configured with a target acceleration limiting unit 24a and a braking-driving-force generation selecting unit 24b.

The target acceleration limiting unit 24a limits the target acceleration set by the target acceleration setting unit 21 based on the limit value, and calculates the target acceleration limited by the limit value. The target acceleration limiting unit 24a is connected to the arbitrator 21d of the target acceleration setting unit 21, the limit value setting unit 23, and the braking-driving-force generation selecting unit 24b. The target acceleration limiting unit 24a receives inputs of the target acceleration set by the arbitrator 21d and the limit value set by the limit value setting unit 23, calculates the target acceleration limited by the limit value, and outputs the target acceleration limited by the calculated limit value to the braking-driving-force generation selecting unit 24b.

The braking-driving-force generation selecting unit 24b selects at least one of the braking device 9, the throttle device 10, and the transmission device 11 that can generate the braking driving force based on the target acceleration limited by the limit value, and controls the selected device to generate the braking driving force based on the target acceleration limited by the limit value. The braking-driving-force generation selecting unit 24b is connected to the target acceleration limiting unit 24a, the braking device 9, the throttle device 10, and the transmission device 11. The braking-driving-force generation selecting unit 24b receives an input of the target acceleration limited by the target acceleration limiting unit 24a, and outputs control signals to at least one of the braking device 9, the throttle device 10, and the transmission device 11 so as to enable the generation of the braking driving force based on the target acceleration limited by the limit value.

The recognition unit 25 recognizes the vehicle ahead which is running in the advancing direction of the subject vehicle not shown on the same lane as the lane on which the subject vehicle is driving based on the positional data of an object detected by the object detecting sensor 3. The recognition unit 25 is connected to the object detecting sensor 3 and the following target-acceleration calculating unit 21a of the target acceleration setting unit 21. The recognition unit 25 receives an input of the positional data of the object detected by the object detecting sensor 3, recognizes the vehicle ahead based on the input positional data, and outputs the positional data of the recognized vehicle ahead to the following target-acceleration calculating unit 21a.

The control device 2 is configured with an input/output port (I/O), a processing unit, and a storage unit not shown. The input/output port not shown is connected to each of the various sensors and devices mentioned above. The input/output port inputs data output from each sensor to the control device 2 and outputs control signals from the control device 2 to various devices. The processing unit not shown is configured with a random access memory (RAM) and a central processing unit (CPU). The processing unit implements a program based on the vehicle travel control method by, for example, loading the program to the RAM and executing the same. Further, the storage unit not shown is configured with a read only memory (ROM), a RAM, or a combination thereof.

The object detecting sensor 3 detects the position of the object present in the advancing direction of the subject vehicle not shown. The object detecting sensor 3 of the embodiment is, for example, a millimeter-wave radar. The millimeter-wave radar detects a position of the object by a detecting method using millimeter waves. The positional data of the detected object is output to the recognition unit 25 of the control device 2. The object detecting sensor 3 is attached to a front, central portion of the subject vehicle, for example, in a radiator grille. The object detecting sensor 3 emits millimeter waves, more specifically, emits millimeter waves from the front surface of the subject vehicle in a predetermined range in the advancing direction, and receives the millimeter waves reflected by the object present in the advancing direction of the subject vehicle. The millimeter-wave radar then calculates the distance from the millimeter-wave radar to the object present in the advancing direction of the subject vehicle by measuring the time from the emission to the reception. Further, the millimeter-wave radar can calculate the relative speed with respect to the object by using the Doppler Effect. Further, the millimeter-wave radar detects a direction of the reflected millimeter wave strongest at the reception, and calculates an angle formed by the advancing direction of the subject vehicle and the direction of the object based on the detected direction. Specifically, when the millimeter-wave radar detects the position of the object, the recognition unit 25 of the control device 2 receives inputs of the distance to the object, relative speed, and the angle as the positional data of the detected object. The object detecting sensor 3 is not limited to the millimeter-wave radar. For example, a radar using laser or infrared light, and an image recognition device using image data obtained by picking up an image in the advancing direction of the subject vehicle using a stereo camera can be employed as the object detecting sensor 3.

The cruise control switch 4 makes the vehicle travel control device 1 perform the vehicle travel control, in other words, ACC. The cruise control switch 4 is attached at a portion near a steering of the subject vehicle not shown. An output of the cruise control switch 4 notifies the control device 2 of the starting of the ACC by the vehicle travel control device 1. Further, the cruise control switch 4 sets the speed of the subject vehicle not shown at the time of constant-speed travel control by the vehicle travel control device 1, and the inter-vehicular distance between the subject vehicle and the vehicle ahead at the time of the forward-vehicle following travel control.

The yaw rate sensor 5 detects the rotating speed of the subject vehicle not shown.

The G sensor 6 is a unit for detecting actual acceleration, and detects the actual acceleration of the subject vehicle not shown. The actual acceleration detected by the G sensor 6 is output to the actual acceleration obtaining unit 22.

The vehicle speed sensor 7 detects the vehicle speed of the subject vehicle not shown. Though not specifically shown, the vehicle speed detected by the vehicle speed sensor 7 is output to the target acceleration setting unit 21 and used at the time of calculation of the target acceleration by each calculating unit.

The brake sensor 8 detects whether a braking pedal not shown is treaded on by a driver not shown, in other words, whether the driver has a will to brake or not. The driver's will to brake as detected by the brake sensor 8 is output to the control device 2. For example, if the control device 2 obtains the driver's will to brake while the vehicle travel control device 1 performs the constant-speed travel control or the forward-vehicle following travel control, the control device 2 prioritizes the driver's will to brake and stops the constant-speed travel control or the forward-vehicle following travel control. In other words, when the driver has the will to brake, the control device 2 stops the constant-speed travel control or the forward-vehicle following travel control, and does not resume the constant-speed travel control or the forward-vehicle following travel control even after the driver loses the will to brake. Therefore, regardless of the control condition by the vehicle travel control device, the braking device 9 generates the braking force, whereby the subject vehicle not shown decelerates.

The braking device 9 generates the braking force to decelerate the subject vehicle not shown. The braking device 9 is configured with a braking control device 91, a brake actuator 92, and a brake 93. The braking control device 91 controls the operation of a braking system, for example, an operation of the brake actuator 92 connected to the braking control device 91. Further, the braking control device 91 operates the brake actuator 92 based on a tread amount of the brake pedal not shown treaded by the driver and the travel state of the subject vehicle. The braking control device 91 can operate the brake actuator 92 according to control signals from the braking-driving-force generation selecting unit 24b of the control device 2. The brake actuator 92 controls the supply of oil to the brake 93 which is operated by oil pressure. The brake 93 supplies a braking force to the subject vehicle according to the oil pressure controlled by the brake actuator 92. The brake 93 is arranged so as to form a pair with each of the wheels of the subject vehicle. The brake 93 is an oil pressure brake which is operated by oil pressure, such as a disc brake and a drum brake. In the braking device 9, when the driver treads on the brake pedal, the brake actuator 92 is operated by the braking control device 91 to supply the oil pressure to the brake 93, support the generation of braking force by the driver, and support the deceleration of the subject vehicle by the driver. Further, in the braking device 9, even when the driver does not tread on the brake pedal, the brake actuator 92 is operated by the braking control device 91 according to the control signal from the braking-driving-force generation selecting unit 24b and supplies oil pressure to the brake 93 to generate braking force so as to allow the deceleration of the subject vehicle. The braking control device 91 is, similarly to the control device 2, configured with an input/output port, a processing unit, a storage unit, and the like not shown.

The throttle device 10 controls an amount of intake air taken into the engine not shown. The engine generates the driving force or the braking force according to the amount of intake air to accelerate or decelerate the subject vehicle not shown. The throttle device 10 is configured with a throttle actuator 101 and a throttle 102. The throttle actuator 101 operates according to control signals output from the control device 2 based on a tread amount of an accelerator pedal (not shown) by the driver, i.e., accelerator opening. Further, the throttle actuator 101 operates according to control signals from the braking-driving-force generation selecting unit 24b of the control device 2. The opening of the throttle 102 is controlled by the operation of the throttle actuator 101. The throttle 102 adjusts the amount of intake air according to the opening. In the throttle device 10, when the driver treads on the accelerator pedal, the control device 2 operates the throttle actuator 101 to control the opening of the throttle 102. The throttle 102 adjusts the amount of intake air by the engine and the engine generates the driving force or the braking force. Even when the driver does not tread on the accelerator pedal, in the braking device 9, the throttle actuator 101 operates according to control signals from the braking-driving-force generation selecting unit 24b so as to control the opening of the throttle 102. The throttle 102 adjusts the amount of intake air of the engine, whereby the engine can generate the driving force or the braking force.

The transmission device 11 is connected to the engine not shown to control a transmission gear 112 which transmits the output of the engine to each wheel not shown. The transmission device 11 is configured with a valve body 111 and the transmission gear 112. The valve body 111 operates according to a control signal output from the control device 2 based on an operation of a shift lever not shown by the driver, or the tread amount of the accelerator pedal not shown by the driver, i.e., the accelerator opening. Further, the valve body 111 operates also according to control signals from the braking-driving-force generation selecting unit 24b of the control device 2. The transmission gear 112 changes the transmission gear ratio of the engine and each wheel not shown according to the operation of the valve body 111 so as to change, in other words, adjust the driving force or the braking force generated by the engine. In the transmission device 11, when the driver operates the shift lever, or the driver treads on the accelerator pedal, the valve body 111 is made to operate by the control device 2 and the transmission gear 112 changes the transmission gear ratio so as to adjust the driving force or the braking force generated by the engine. Further, even when the driver does not operate the shift lever or tread on the accelerator pedal, in the transmission device 11, the valve body 111 operates according to the control signal from the braking-driving-force generation selecting unit 24b and the transmission gear 112 changes the transmission gear ratio, whereby the driving force or the braking force generated by the engine can be adjusted.

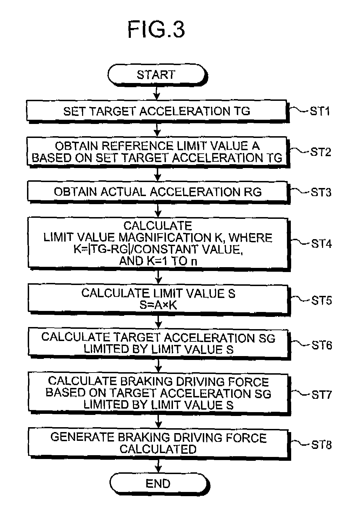

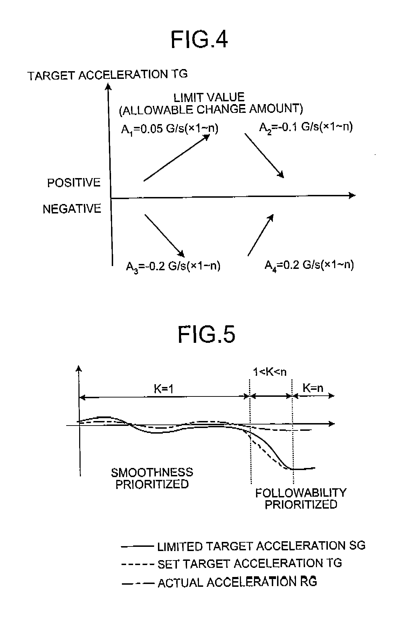

A vehicle travel control method using the vehicle travel control device 1 of the present invention is described below. FIG. 3 is a flowchart of an operation of the vehicle travel control device according to the present invention. FIG. 4 is a graph of a map of reference limit values. FIG. 5 is a graph of a relation between the acceleration and the limit value magnification.

Firstly, as shown in FIG. 3, the target acceleration setting unit 21 of the control device 2 sets the target acceleration TG (step ST1). Here, the following target-acceleration calculating unit 21a calculates the following target acceleration, the constant-speed target-acceleration calculating unit 21b calculates the constant-speed target acceleration, and the corner-acceleration-prohibiting target-acceleration calculating unit 21c calculates the corner-acceleration-prohibiting target acceleration. The arbitrator 21d selects the smallest target acceleration from the calculated target accelerations, and sets the selected target acceleration as the target acceleration TG.

Then, the limit value setting unit 23 of the control device 2 obtains a reference limit value A based on the target acceleration TG set as described above (step ST2). Here, the limit value setting unit 23 determines the reference limit value A according to the set target acceleration TG and the reference limit value map which is based on the set target acceleration TG and the reference limit value A stored in the storage unit (not shown) of the control device 2. In the reference limit value map, as shown in FIG 4, four reference limit values $A_1$ to $A_4$ are set based on positive and negative of the set target acceleration TG and positive and negative of the changes of the set target acceleration TG. Therefore, the limit value setting unit 23 compares the target acceleration TG previously set by the target acceleration setting unit 21 with the target acceleration TG currently set to see whether the target acceleration TG currently set changes to the positive or to the negative during a predetermined time (one second in this embodiment) relative to the target acceleration TG previously set and how much it changes, and determines the reference limit value A based on this result and the positive and negative of the target acceleration TG currently set by the target acceleration setting unit 21.

Here, four reference limit values $A_1$ to $A_4$ (absolute values) are set so that the reference limit values $A_3$ and $A_4$ (absolute values) that are employed for the negative target acceleration TG are larger than the reference limit values $A_1$ and $A_2$ that are employed for the positive target acceleration TG. In the reference limit value map shown in FIG. 4, for example, when the target acceleration TG is positive and the change is also positive, the reference limit value $A_1$ is 0.05G/S; when the target acceleration TG is positive and the change is negative, the reference limit value $A_2$ is -0.1G/S; when the target acceleration TG is negative and the change is also negative, the reference limit value $A_3$ is 0.2G/S; and when the target acceleration TG is negative and the change is positive, the reference limit value $A_1$ is set to 0.2G/S. Here, G/S represents acceleration per second.

The actual acceleration obtaining unit 22 of the control device 2 obtains the actual acceleration RG of the subject vehicle not shown (step ST3). Here, the actual acceleration obtaining unit 22 obtains the actual acceleration RG of the subject vehicle as detected by the G sensor 6. The actual acceleration obtaining unit 22 outputs the obtained actual acceleration RG to the limit value setting unit 23 as mentioned above.

The limit value setting unit 23 of the control device 2 calculates limit value magnification K (step ST4). Here, the limit value setting unit 23 calculates the limit value magnification K based on the set target acceleration TG and the actual acceleration RG. The limit value magnification K in the embodiment is calculated according to a following equation (1). In the equation, "constant value" is determined based on the type of the vehicle on which the vehicle travel control device 1 is mounted and the characteristic of the engine mounted on the vehicle. Further, the limit value magnification K is limited to a number from 1 to n. Here, n is 5, for example.

$$K=|TG-RG|/\text{constant value} \qquad \dots (1)$$

The limit value setting unit 23 of the control device 2 calculates limit value S (step ST5). The limit value setting unit 23 calculates the limit value S based on the reference limit value A determined as described above and the limit value magnification K calculated as described above. The limit value S is calculated by multiplying the determined reference limit value A with the calculated limit value magnification K in the embodiment. The limit value S is, therefore, a few times the reference limit value A, and thereby representing an allowable change amount of the set target acceleration TG per one second. The limit value setting unit 23 outputs the calculated limit value S to the target acceleration limiting unit 24a of the braking-driving-force control unit 24 as mentioned above.

Here, the limit value S (absolute value) becomes larger as the difference between the set target acceleration TG and the actual acceleration RG increases, because the limit value magnification K increases as the difference between the set target acceleration TG and the actual acceleration RG increases as shown by the equation (1). Specifically, the limit value setting unit 23 does not increase the limit value S, when the difference between the set target acceleration TG and the actual acceleration RG is small, in other words, when the vehicle travel control device 1 does not cause sudden acceleration or deceleration of the subject vehicle not shown. Further, the limit value setting unit 23 increases the limit value S when the difference between the set target acceleration TG and the actual acceleration RG is large, in other words, when the vehicle travel control device 1 causes a sudden acceleration and deceleration of the subject vehicle.

Further, since the reference limit value map is set so that the reference limit values $A_3$ and $A_4$ (absolute values) for the negative, set target acceleration TG are larger than the reference limit values $A_1$ and $A_2$ (absolute values) for the positive, set target acceleration TG, the calculated limit value S (absolute value) is larger when the set target acceleration TG is negative than when the set target acceleration TG is positive.

Then, the target acceleration limiting unit 24a of the control device 2 calculates the target acceleration SG limited by the limit value S calculated as above (step ST6). In the embodiment, the target acceleration limiting unit 24a limits the set target acceleration TG based on the limit value S calculated as an allowable change amount per one second and calculates the target acceleration SG limited by the limit value S.

The braking-driving-force generation selecting unit 24b of the control device 2 calculates the braking driving force based on the target acceleration SG limited by the limit value S calculated as described above, and selects the braking driving force generating unit which generates the braking driving force as calculated (step ST7). Here, the braking-driving-force generation selecting unit 24b calculates the braking driving force which can achieve the target acceleration SG limited according to the travel state of the subject vehicle, such as a current vehicle speed of the subject vehicle not shown. Further, the braking-driving-force generation selecting unit 24b selects at least one of the braking device 9 that generates the braking force, the throttle device 10 that makes the engine not shown generate the braking force or the driving force, and the transmission device 11 that adjusts the braking force or the driving force generated by the engine, as a device which can generate the calculated braking driving force in the current travel state of the subject vehicle.

Then, the selected braking driving force generating unit, i.e., at least one of the braking device 9, the throttle device 10, and the transmission device 11, generates the calculated braking driving force (step ST8). Here, the braking-driving-force generation selecting unit 24b of the control device 2 controls the selected braking driving force generating unit by outputting a control signal to the selected braking driving force generating unit so that the selected braking driving force generating unit can generate the calculated braking driving force.

As can be seen from the above, and as shown in FIG. 5, when the difference between the set target acceleration TG (dotted line of FIG. 5) and the actual acceleration RG (chain line of FIG. 5) is small, the limit value magnification K becomes 1 or approaches 1. Therefore, the limit value S does not become large and the limited target acceleration SG (solid line in FIG. 5) does not reach the set target acceleration TG quickly. Hence, the vehicle travel control device 1 can accelerate or decelerate smoothly, for example, at the time of constant-speed travel control or the forward-vehicle-following travel control, if the driving is normal, for example, if the vehicle ahead is running at a constant speed and the difference between the set target acceleration TG and the actual acceleration RG is small, so as to perform the vehicle travel control prioritizing the suppression of loss of comfort for the passenger of the subject vehicle over the followability to the set target acceleration TG.

On the other hand, when the difference between the set target acceleration TG and the actual acceleration RG is large, the limit value magnification K approaches n, whereby the limit value S becomes large, and the limited target acceleration SG easily reaches the set target acceleration TG. Hence, the vehicle travel control device 1 allows sudden acceleration and deceleration when, for example, the vehicle travel control device 1 switches from the constant-speed travel control to the forward-vehicle-following travel control (immediately after the vehicle ahead enters the lane on which the subject vehicle not shown is running), or when the vehicle travel control device 1 switches from the forward-vehicle-following travel control to the constant-speed travel control (immediately after the vehicle ahead moves out from the lane on which the subject vehicle is running), in other words, at the time of emergent driving in which the difference between the set target acceleration and the actual acceleration is large, so as to perform the vehicle travel control prioritizing the improved followability to the set target deceleration over the suppression of loss of comfort of the passenger of the subject vehicle. Thus, the vehicle travel control device 1 can accelerate and decelerate smoothly according to the travel state of the subject vehicle so as to improve the followability to the set target deceleration.

Further, the vehicle travel control device 1 of the embodiment can make the target acceleration SG limited by the limit value S reach the set target acceleration TG quicker when the set target acceleration TG is negative, in other words, when the braking force is generated by at least one of the braking device 9, the throttle device 10, and the transmission device 11 to decelerate the subject vehicle not shown, than when the subject vehicle is accelerated. In brief, the followability to the set target deceleration can be further improved in the deceleration of the subject vehicle in comparison with the acceleration of the subject vehicle. Therefore, the vehicle travel control device 1 can decelerate the subject vehicle significantly right from an initial phase of braking of the subject vehicle when the vehicle travel control device 1 switches from the constant-speed travel control to the forward-vehicle-following travel control (immediately after the vehicle ahead enters the lane on which the subject vehicle not shown is running), or when the vehicle ahead decelerates by a large amount while the vehicle travel control device 1 performs the forward-vehicle-following control driving, in other words, when the difference between the negative set target acceleration TG and the detected actual acceleration RG increases. Thus, the vehicle travel control device 1 can perform the vehicle travel control prioritizing the safety of the subject vehicle.

INDUSTRIAL APPLICABILITY

As can be seen from the above, the vehicle travel control device and the vehicle travel control method according to the present invention are useful for a vehicle travel control device and a vehicle travel control method that set target acceleration and generate a braking driving force according to the set target acceleration, and more particularly, are suitable for performing acceleration and deceleration smoothly according to the travel state of a vehicle so as to improve the followability to the set target deceleration.

**Claims**

1. A vehicle travel control device comprising:

    a target acceleration setting unit that sets target acceleration of a subject vehicle;
    an actual acceleration obtaining unit that obtains actual acceleration of the subject vehicle;
    a limit value setting unit that sets a limit value for limiting a change of the target acceleration; and
    a braking-driving-force control unit that controls a braking driving force generating unit to limit the target acceleration based on the limit value set and to generate a braking driving force based on the target acceleration limited, wherein
    the limit value setting unit sets the limit value to a higher value as a difference between the target acceleration set and the actual acceleration detected is larger.

2. The vehicle travel control device according to claim 1, wherein
    the limit value setting unit sets the limit value to a higher value when the target acceleration set is negative than when the target acceleration set is positive.

3. A vehicle travel control method comprising:

    setting target acceleration of a subject vehicle;
    obtaining actual acceleration of the subject vehicle;
    setting a limit value for limiting a change of the target acceleration to a higher value as a difference between the target acceleration set and the actual acceleration detected is larger;
    limiting the target acceleration based on the limit value set; and
    making a braking driving force generating unit generate a braking driving force corresponding to a braking driving force based on the target acceleration limited.

EP 2 000 380 A2

# FIG.1

1

3 OBJECT DETECTING SENSOR

4 CRUISE CONTROL SWITCH

5 YAW RATE SENSOR

6 G SENSOR

7 VEHICLE SPEED SENSOR

8 BRAKE SENSOR

2

21 TARGET ACCELERATION SETTING UNIT

22 ACTUAL ACCELERATION OBTAINING UNIT

23 LIMIT VALUE SETTING UNIT

24 BRAKING-DRIVING-FORCE CONTROL UNIT

9

91 BRAKING CONTROL DEVICE

92 BRAKE ACTUATOR

93 BRAKE

10

101 THROTTLE ACTUATOR

102 THROTTLE

11

111 VALVE BODY

112 TRANSMISSION GEAR

# FIG.2

OBJECT DETECTING SENSOR ~3

G SENSOR ~11

2

RECOGNITION UNIT

25

TARGET ACCELERATION SETTING UNIT ~21

FOLLOWING TARGET-ACCELERATION CALCULATING UNIT ~21a

CONSTANT-SPEED TARGET-ACCELERATION CALCULATING UNIT ~21b

CORNER-ACCELERATION-PROHIBITING TARGET-ACCELERATION CALCULATING UNIT ~21c

ARBITRATOR ~21d

ACTUAL ACCELERATION OBTAINING UNIT ~22

LIMIT VALUE SETTING UNIT ~23

TARGET ACCELERATION LIMITING UNIT ~24a

BRAKING-DRIVING-FORCE GENERATION SELECTING UNIT ~24b

BRAKING-DRIVING-FORCE CONTROL UNIT ~24

VALVE BODY ~111

TRANSMISSION GEAR ~112

11

THROTTLE ACTUATOR ~101

THROTTLE ~102

10

BRAKING CONTROL DEVICE ~91

BRAKE ACTUATOR ~92

BRAKE ~93

9

# FIG.3

START

| SET TARGET ACCELERATION TG | ~ST1 |

| OBTAIN REFERENCE LIMIT VALUE A BASED ON SET TARGET ACCELERATION TG | ~ST2 |

| OBTAIN ACTUAL ACCELERATION RG | ~ST3 |

CALCULATE
LIMIT VALUE MAGNIFICATION K, WHERE
K=|TG-RG|/CONSTANT VALUE,
AND K=1 TO n                                                    ~ST4

CALCULATE LIMIT VALUE S
S=A×K                                                          ~ST5

CALCULATE TARGET ACCELERATION SG
LIMITED BY LIMIT VALUE S                                       ~ST6

CALCULATE BRAKING DRIVING FORCE
BASED ON TARGET ACCELERATION SG
LIMITED BY LIMIT VALUE S                                       ~ST7

GENERATE BRAKING DRIVING FORCE
CALCULATED                                                     ~ST8

END

# FIG.4

TARGET ACCELERATION TG

LIMIT VALUE
(ALLOWABLE CHANGE AMOUNT)

$A_1$=0.05 G/s($\times$1~n)        $A_2$=-0.1 G/s($\times$1~n)

POSITIVE

NEGATIVE

$A_3$=-0.2 G/s($\times$1~n)        $A_4$=0.2 G/s($\times$1~n)

# FIG.5

$1<K<n$

K=1        K=n

SMOOTHNESS
PRIORITIZED

FOLLOWABILITY
PRIORITIZED

——— LIMITED TARGET ACCELERATION SG
- - - - - SET TARGET ACCELERATION TG
—-—— ACTUAL ACCELERATION RG

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003339980 A
- JP H10109627 B
- JP H5286426 B
- JP H11348746 B